(19) Europäisches Patentamt
European Patent Office
Office européen des brevets

(11) **EP 3 227 645 B1**

(12) **FASCICULE DE BREVET EUROPEEN**

(45) Date de publication et mention de la délivrance du brevet:
**19.09.2018 Bulletin 2018/38**

(51) Int Cl.:
***G01D 21/00*** *(2006.01)*    ***G06Q 10/06*** *(2012.01)*
***G06Q 50/04*** *(2012.01)*

(21) Numéro de dépôt: **15817970.5**

(22) Date de dépôt: **04.12.2015**

(86) Numéro de dépôt international:
**PCT/FR2015/053333**

(87) Numéro de publication internationale:
**WO 2016/087801 (09.06.2016 Gazette 2016/23)**

(54) **PROCÉDÉ DE FABRICATION DE PIÈCES BASÉ SUR L'ANALYSE DE COEFFICIENTS DE CENTRAGE**

VERFAHREN ZUR HERSTELLUNG VON TEILEN, AUF BASIS DER ANALYSE VON ZENTRIERUNGSKOEFFIZIENTEN

METHOD OF MANUFACTURING PARTS, BASED ON THE ANALYSIS OF CENTRING COEFFICIENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.12.2014 FR 1461994**

(43) Date de publication de la demande:
**11.10.2017 Bulletin 2017/41**

(73) Titulaire: **SAFRAN AIRCRAFT ENGINES**
**75015 Paris (FR)**

(72) Inventeurs:
• **FERRY, Olivier**
**77550 Moissy-Cramayel (FR)**
• **CAMBEFORT, Arnaud**
**77550 Moissy-Cramayel (FR)**
• **COURTIN, Pascal**
**77550 Moissy-Cramayel (FR)**
• **HARDOUIN, Nicolas**
**77550 Moissy-Cramayel (FR)**
• **CLERET DE LANGAVANT, Charles**
**77550 Moissy-Cramayel (FR)**

(74) Mandataire: **Regimbeau**
**20, rue de Chazelles**
**75847 Paris Cedex 17 (FR)**

(56) Documents cités:
**US-A- 5 655 110**

EP 3 227 645 B1

**Description**

DOMAINE DE L'INVENTION

L'invention porte sur l'utilisation d'indicateurs statistiques en milieu industriel, par exemple dans l'industrie aéronautique, en particulier pour faciliter le suivi et le contrôle de la fabrication de pièces.

ETAT DE LA TECHNIQUE

La fabrication de pièces, notamment mécaniques, en milieu industriel se heurte à deux contraintes opposées, à savoir l'augmentation des cadences et volumes de fabrication d'une part, et l'augmentation des niveaux de qualité requis d'autre part, ce qui est en particulier vrai dans le domaine aéronautique.

Il est aujourd'hui difficilement envisageable d'effectuer des contrôles qualité pour la totalité des pièces fabriquées sauf à nuire considérablement à la cadence de fabrication. On utilise donc en général des indicateurs statistiques de la fabrication, permettant de déduire de manière fiable une information globale sur la qualité de l'ensemble des pièces fabriquées à partir d'information spécifiques de la qualité d'un nombre fini de pièces prélevées en tant qu'échantillon.

Outre les contrôles en fin de production qui peuvent être faits sur des échantillons ayant un nombre limité de pièces, il est généralement également effectué des contrôles en cours de production de manière à pouvoir éventuellement piloter le flux de production, c'est-à-dire ajuster les conditions de fabrication pour s'assurer que les pièces fabriquées continuent de répondre aux critères de qualités requis. Dans certains cas, ces contrôles statistiques en cours de production peuvent amener à stopper complètement la production, notamment si les pièces produites présentent des défauts de qualité trop importants et que le flux de fabrication doit être réinitialisé entièrement.

Les contrôles qualité sont faits en relation à une dimension caractéristique des pièces qui sont fabriquées. Cette dimension caractéristique peut être par exemple une cote particulière de la pièce, sa masse, ou toute autre caractéristique mesurable desdites pièces.

Pour effectuer les contrôles statistiques, on prélève successivement plusieurs échantillons, chaque échantillon comprenant plusieurs pièces du flux de fabrication, et on mesure ensuite la dimension caractéristique de chaque pièce de l'échantillon prélevé. A partir des différentes mesures de la dimension caractéristique des pièces de l'échantillon prélevé, on calcule la valeur d'un indicateur statistique préalablement choisi pour suivre la qualité du flux de fabrication.

Il existe divers indicateurs statistiques pouvant être utilisés afin de suivre l'évolution d'un flux de fabrication de pièces, chaque indicateur statistique donnant des informations différentes permettant d'ajuster les conditions de fabrication d'une manière ou d'une autre.

La plupart des indicateurs statistiques utilisés pour le suivi d'un processus industriel de fabrication sont calculés à partir d'une moyenne $\mu$ et d'un écart-type $\sigma$ de la dimension caractéristique mesurée sur plusieurs pièces. Plus précisément, $\mu$ correspond à la moyenne du décentrage mesuré pour la dimension caractéristique par rapport à la valeur de référence pour cette dimension caractéristique.

Le brevet US5655110 décrit un tel processus industriel de fabrication. L'un des indicateurs statistiques régulièrement utilisé est le coefficient de centrage, noté Cc, qui représente un bridage imposé aux variations de la moyenne $\mu$ à l'intérieur de l'intervalle de tolérance IT.

L'intervalle de tolérance IT est l'écart entre les valeurs extrêmes admissibles de la dimension caractéristique, étant donc calculé comme la différence entre la tolérance supérieure TS et la tolérance inférieure TI de la dimension caractéristique mesurée, soit IT = TS - TI.

Le coefficient de centrage Cc est généralement défini par la formule :

$$Cc = \frac{\mu}{(TS - TI)/2}$$

Autrement dit, cet indicateur statistique représente un décentrage moyen rapporté à l'intervalle de tolérances de la cote. Par exemple, lorsque le plan de fabrication des pièces spécifie un Cc de 0,2, cela signifie que l'on autorise la moyenne à évoluer librement entre +/- 20% de l'intervalle de tolérance. Si la tolérance est de +/- 0,1, cela impose à la moyenne de se trouver entre +0,02 et -0,02.

Dans un suivi d'un processus de fabrication avec analyse d'indicateurs statistiques, on se réfère également aux intervalles de confiance caractérisant l'analyse statistique. Les intervalles de confiance sur la moyenne dépendent non seulement de la taille de l'échantillon et de la moyenne elle-même, mais aussi de l'écart-type mesuré.

En effet, étant donné $\alpha$ un degré de confiance (par exemple $\alpha$ = 90%), l'intervalle de confiance de la moyenne $\mu$ au seuil de confiance $\alpha$ d'un échantillon de $n$ pièces sur lequel ont été mesurés une moyenne $\mu$ et un écart-type $\sigma$ est donné par :

$$IC_\alpha = [\mu - t_\alpha^{n-1} \frac{\sigma}{\sqrt{n}} ; \mu + t_\alpha^{n-1} \frac{\sigma}{\sqrt{n}}]$$

où $t_\alpha^{n-1}$ désigne le quantile $\alpha$ de la loi de Student à $n$ - 1 degrés de liberté.

Vue la définition du coefficient de centrage Cc, on peut obtenir des mesures de coefficients de centrage qui sont identiques pour deux échantillons ayant le même nombre de pièces alors que leur écart-type est différent, et conduira donc à des intervalles de confiance sur le coefficient de centrage Cc différents.

Un but de la présente invention est donc de fournir un procédé de fabrication de pièces basé sur l'analyse d'au moins un indicateur statistique, qui permet de remédier aux inconvénients précités.

Plus spécifiquement, un but de la présente invention est de fournir un procédé de fabrication de pièces basé sur l'analyse d'au moins un indicateur statistique qui donne des informations de centrage de la moyenne d'une dimension caractéristique étudiée, avec des intervalles de confiance fiables et stables quel que soit l'écart type de la dimension caractéristique étudiée.

## EXPOSE DE L'INVENTION

A cette fin, on propose un procédé de fabrication de pièces basé sur l'analyse d'au moins un indicateur statistique représentatif d'une dimension caractéristique des pièces, selon lequel :

  a) On prélève au cours du temps plusieurs échantillons, chaque échantillon comprenant plusieurs pièces fabriquées par un dispositif de fabrication ;
  b) On mesure la dimension caractéristique de chaque pièce de l'échantillon ;
  c) On calcule pour chaque échantillon prélevé une moyenne $\mu$ et un écart-type $\sigma$ de la dimension caractéristique mesurée, puis on calcule pour chaque échantillon prélevé une valeur d'un indicateur statistique I3C défini selon la formule :

$$I3C = \frac{Min(Cc_{max} * TS - \mu ; \mu - Cc_{max} * TI)}{3\sigma}$$

où :

    $\circ$ $Cc_{max}$ est un coefficient de centrage maximal imposé pour la fabrication des pièces ;
    $\circ$ TS est une tolérance supérieure de la dimension caractéristique mesurée ;
    $\circ$ TI est une tolérance inférieure de la dimension caractéristique mesurée ;

  d) On compare la valeur de l'indicateur statistique I3C ainsi calculée pour l'échantillon prélevé à une valeur de référence, ce qui permet par exemple de détecter un écart éventuel entre la valeur de l'indicateur statistique et la valeur de référence ;
  e) On pilote le flux de fabrication des pièces en fonction des résultats de la comparaison, de préférence en ajustant des paramètres de réglage du dispositif de fabrication utilisé pour fabriquer les pièces afin d'optimiser un écart entre la valeur de l'indicateur statistique et la valeur de référence.

Chacune des étapes présentées est automatisée.

L'étape de mesure de la dimension caractéristique peut être faite avec un dispositif de mesure, comprenant par exemple des capteurs permettant de réaliser une mesure automatisée de dimensions spécifiques de la pièce.

Les étapes de calcul peuvent être faites par tout dispositif de calcul approprié, tel que par exemple des moyens de traitement de données informatiques, tel qu'un ordinateur.

L'étape de pilotage peut par exemple être réalisée par un dispositif de pilotage intégrant des moyens de traitement pour intégrer et traiter les données issues des étapes de calcul, afin de corriger tout écart détecté dans la production et corriger le flux de production. En particulier, le dispositif de pilotage est prévu pour corriger les paramètres d'entrée du dispositif de production dont sont issues les pièces.

Le dispositif de pilotage vient donc de préférence ajuster les paramètres de réglage du dispositif de fabrication utilisé pour fabriquer les pièces afin par exemple de réduire l'écart entre la valeur de l'indicateur statistique et la valeur de référence.

De manière plus générale, on cherche à optimiser l'écart entre la valeur de l'indicateur statistique et la valeur de référence pour que la production des pièces soit conforme aux exigences du cahier des charges associé. On modifie les paramètres de production pour modifier, resp. corriger, l'écart identifié entre la valeur de l'indicateur statistique et la valeur de référence. En fonction de l'indicateur statistique utilisé, optimiser l'écart pourra par exemple consister à réduire l'écart identifié.

Des aspects préférés mais non limitatifs de ce procédé, pris seuls ou en combinaison, sont les suivants :

- à l'étape d), la valeur de référence est dépendante du nombre n de pièces de l'échantillon prélevé.
- à l'étape d), la valeur de référence est définie par la formule :

$$\frac{t_\alpha^{n-1}}{3\sqrt{n}}$$

où $\alpha$ désigne un degré de confiance en pourcentage et $t_\alpha^{n-1}$ désigne le quantile $\alpha$ de la loi de Student à n-1 degrés de liberté.

- à l'étape e), si la valeur de l'indicateur statistique I3C calculée pour l'échantillon prélevé est supérieure ou égale à la valeur de référence, alors on ne modifie pas les conditions de fabrication des pièces.
- à l'étape e), si la valeur de l'indicateur statistique I3C calculée pour l'échantillon prélevé est inférieure à la valeur de référence, alors on modifie les conditions de fabrication des pièces et on réitère les étapes a) à e) jusqu'à obtenir une valeur de l'indicateur statistique I3C calculée pour un échantillon prélevé qui est supérieure ou égale à la valeur de référence.

## DESCRIPTION DES FIGURES

D'autres caractéristiques et avantages de l'invention ressortiront encore de la description qui suit, laquelle est purement illustrative et non limitative et doit être lue en regard des dessins annexés, sur lesquels :

- la figure 1 est un graphique illustrant les intervalles de confiance sur les coefficients de centrage pour différents écarts-type ;
- la figure 2 est un graphique illustrant la sévérisation sur le coefficient de centrage Cc avec le procédé de suivi selon l'invention.
- La figure 3 est un schéma illustrant une chaine de production intégrant un contrôle et pilotage de la production avec échantillonnage de pièces.

## DESCRIPTION DETAILLEE DE L'INVENTION

Dans le cadre d'un plan de contrôle avec une surveillance par prélèvements réguliers, il est impossible d'imposer une sévérisation du coefficient de centrage Cc qui ne dépend que de la taille de l'échantillon, car cette sévérisation ne peut être déterminée qu'a posteriori, compte tenu de l'écart-type mesuré sur chaque échantillon.

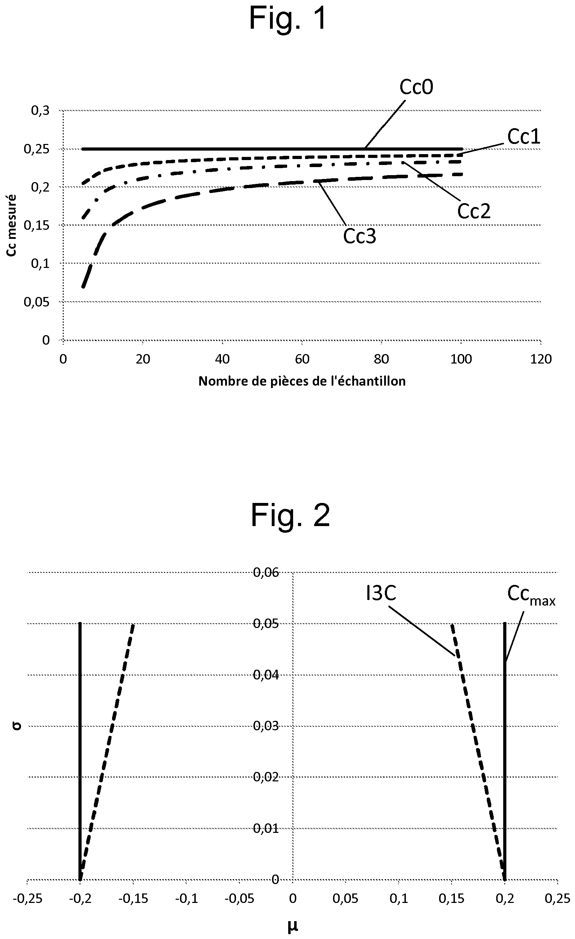

Le graphique de la figure 1 illustre cette impossibilité. La courbe Cc0 représente la cible de Cc recherchée tandis que les autres courbes représentent, en fonction du nombre de pièces contenu dans l'échantillon prélevé, le coefficient de centrage maximal à prouver pour avoir une borne supérieure de l'intervalle de confiance à 5% pour le coefficient de centrage Cc inférieure à la cible.

La courbe Cc1 correspond à un écart type $\sigma$ égal à 0.05, la courbe Cc2 correspond à un écart type $\sigma$ égal à 0.1, et la courbe Cc3 correspond à un écart type $\sigma$ égal à 0.2.

Le graphique de la figure 1 permet de constater en particulier que pour une taille d'échantillon donnée, plus l'écart-type de l'échantillon est faible, et plus la sévérisation que l'on imposera sur le coefficient de centrage Cc est mineure.

Il a donc été développé un indicateur statistique permettant un suivi du coefficient de centrage Cc en tenant compte des intervalles de confiance sur la moyenne.

Plus spécifiquement, on propose d'utiliser un indice plus contraint que le coefficient de centrage Cc qui tient compte de l'écart-type mesuré sur chaque échantillon.

Dans un flux industriel de fabrication de pièces, on prélève au cours du temps plusieurs échantillons, chaque échantillon comprenant plusieurs pièces du flux de fabrication.

Pour chaque échantillon, on mesure la dimension caractéristique de chaque pièce et on calcule ensuite pour chaque échantillon prélevé la moyenne $\mu$ et l'écart-type $\sigma$ de la dimension caractéristique mesurée.

Selon le procédé proposé, on va ensuite calculer pour chaque échantillon prélevé une valeur d'un indicateur statistique noté I3C, qui correspond à un indice de confiance sur le Coefficient de Centrage, et que l'on définit selon la formule :

$$I3C = \frac{Min(Cc_{max} * TS - \mu \,; \mu - Cc_{max} * TI)}{3\sigma}$$

où :

- Cc$_{max}$ est le coefficient de centrage maximal imposé pour la fabrication des pièces ;
- TS est la tolérance supérieure de la dimension caractéristique mesurée ;
- TI est la tolérance inférieure de la dimension caractéristique mesurée.

Il convient ensuite de comparer la valeur de l'indicateur statistique I3C ainsi calculée pour l'échantillon prélevé à une valeur de référence, et de piloter le flux de fabrication des pièces en fonction des résultats de la comparaison.

Selon un exemple de réalisation, si la valeur de l'indicateur statistique I3C calculée pour l'échantillon prélevé est supérieure ou égale à la valeur de référence, alors on ne modifie pas les conditions de fabrication des pièces. Au contraire, si la valeur de l'indicateur statistique I3C calculée pour l'échantillon prélevé est inférieure à la valeur de référence, alors on modifie les conditions de fabrication des pièces afin de modifier le flux de fabrication jusqu'à ce que les échantillons prélevés donnent des valeurs de l'indicateurs I3C convenables.

En fixant à l'indicateur I3C de l'échantillon prélevé une cible minimale à atteindre qui ne dépend que du nombre de pièces contrôlées, on garantit avec un seuil de confiance $\alpha$ que le coefficient de centrage Cc de la population toute entière est conforme aux exigences de la spécification.

De préférence, on choisit une valeur de référence donnée par la formule :

$$\frac{t_\alpha^{n-1}}{3\sqrt{n}}$$

où $\alpha$ désigne un degré de confiance en pourcentage, et $t_\alpha^{n-1}$ désigne le quantile $\alpha$ de la loi de Student à n-1 degrés de liberté.

On a alors l'équivalence :

$$I3C > \frac{t_\alpha^{n-1}}{3\sqrt{n}} \quad \Leftrightarrow \quad IC_\alpha \subset [Cc_{max} * TI \,; Cc_{max} * TS]$$

La figure 2 est un graphique illustrant l'écart-type en fonction du décentrage de la moyenne. Les sévérisations sur le coefficient de centrage Cc imposées par la contrainte de l'indicateur I3C dans le cas d'un échantillonnage est illustré sur la courbe I3C par rapport à la courbe Cc$_{max}$ donnant la spécification maximale du coefficient de centrage imposé dans le cadre du flux de fabrication.

Cet indice de confiance sur le coefficient de centrage I3C permet donc de surmonter l'absence d'information sur l'écart-type contenue dans le calcul du coefficient de centrage Cc qui empêche de calculer une sévérisation générique du critère de Cc.

En outre, ce nouvel indicateur I3C peut être appréhendé de manière similaire à un indice de capabilité Cpk défini généralement par la formule :

$$Cpk = \frac{Min(TS - \mu \,; \mu - TI)}{3\sigma}$$

L'indice de confiance sur le coefficient de centrage I3C fonctionne donc de manière similaire à un indice de capabilité Cpk à la différence essentielle des bornes en Cc$_{max}$*TI et Cc$_{max}$*TS.

L'indice de capabilité Cpk étant classiquement utilisé en milieu industriel dans le suivi de processus de fabrication de pièces, le nouvel indicateur I3C proposé pourra donc être facilement implémenté sans que les processus de contrôle soient perturbés.

Le procédé proposé peut être mis en oeuvre dans une chaîne de fabrication de pièces, pouvant être totalement ou partiellement automatisée, où des contrôles en cours de production permettent de piloter le flux de fabrication, c'est-à-dire ajuster les conditions de fabrication pour s'assurer que les pièces fabriquées continuent de répondre aux critères de qualités requis.

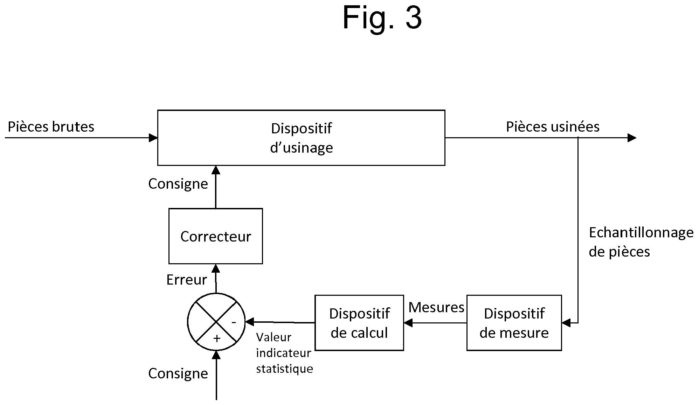

La figure 3 donne un exemple d'une telle chaine de fabrication dans laquelle un dispositif d'usinage, comme par exemple une machine 5 axes, est utilisé pour fabriquer des pièces selon une consigne spécifique. La consigne spécifique peut par exemple porter sur une dimension caractéristique particulière. A la place du dispositif d'usinage, il pourrait bien entendu être utilisé un dispositif de fabrication non limité à de l'usinage de pièces.

Dans cette chaine automatisée de production, des pièces sont prélevées en sortie du dispositif d'usinage afin de former un échantillon et transmise à un dispositif de mesure qui mesure une ou plusieurs dimensions caractéristiques de chaque pièce de l'échantillon prélevé. Un tel dispositif de mesure peut par exemple être une machine de mesure tridimensionnelle ayant des capteurs qui mesurent automatiquement les dimensions caractéristiques souhaitées de chacune des pièces.

Les données de mesures issues du dispositif de mesure sont ensuite transmises à un dispositif de calcul qui les traite pour calculer un ou plusieurs indicateurs statistiques représentatifs d'une des dimensions caractéristiques des pièces.

La valeur calculée de l'indicateur statistique est ensuite comparée à une consigne de référence sur la dimension caractéristique afin de piloter le flux de fabrication. Plus précisément, les résultats de cette comparaison permettent d'éventuellement ajuster les paramètres d'entrée du dispositif d'usinage.

Si un écart est constaté, impliquant une erreur, par exemple si la valeur de l'indicateur statistique sur la dimension caractéristique est en dehors d'une plage acceptable définie par la consigne de référence, des mesures correctrices sont déterminées par un correcteur afin d'ajuster les paramètres d'entrée du dispositif d'usinage. L'objectif des modifications des paramètres d'entrée du dispositif d'usinage est de corriger l'écart constaté, pour que la valeur de l'indicateur statistique sur la dimension caractéristique soit de nouveau dans une plage acceptable.

## Revendications

**1.** Procédé de fabrication de pièces produites avec un dispositif de fabrication, basé sur l'analyse d'au moins un indicateur statistique représentatif d'une dimension caractéristique des pièces, comprenant les étapes automatisées suivantes consistant à :

a) prélever au cours du temps plusieurs échantillons, chaque échantillon comprenant plusieurs pièces produites avec le dispositif de fabrication ;
b) mesurer, avec un dispositif de mesure, la dimension caractéristique de chaque pièce de l'échantillon ;
c) calculer, avec un dispositif de calcul, pour chaque échantillon prélevé une moyenne $\mu$ et un écart-type $\sigma$ de la dimension caractéristique mesurée, puis on calcule pour chaque échantillon prélevé une valeur d'un indicateur statistique I3C défini selon la formule :

$$I3C = \frac{Min(Cc_{max} * TS - \mu \, ; \mu - Cc_{max} * TI)}{3\sigma}$$

où :

◦ $Cc_{max}$ est un coefficient de centrage maximal imposé pour la fabrication des pièces ;
◦ TS est une tolérance supérieure de la dimension caractéristique mesurée ;
◦ TI est une tolérance inférieure de la dimension caractéristique mesurée ;

d) comparer, avec un dispositif de pilotage, la valeur de l'indicateur statistique I3C ainsi calculée pour l'échantillon prélevé à une valeur de référence pour détecter un écart éventuel entre la valeur de l'indicateur statistique I3C et la valeur de référence ;
e) piloter, avec le dispositif de pilotage, la fabrication des pièces en fonction des résultats de la comparaison en ajustant des paramètres de réglage du dispositif de fabrication pour optimiser l'écart entre la valeur de l'indicateur statistique I3C et la valeur de référence.

**2.** Procédé selon la revendication 1, dans lequel à l'étape d), la valeur de référence est dépendante du nombre n de pièces de l'échantillon prélevé.

3. Procédé selon la revendication 2, dans lequel à l'étape d), la valeur de référence est définie par la formule :

$$\frac{t_\alpha^{n-1}}{3\sqrt{n}}$$

où :

- ∘ $\alpha$ désigne un degré de confiance en % ; et
- ∘ $t_\alpha^{n-1}$ désigne le quantile $\alpha$ de la loi de Student à n-1 degrés de liberté.

4. Procédé selon l'une quelconque des revendications 1 à 3, dans lequel à l'étape e), si la valeur de l'indicateur statistique I3C calculée pour l'échantillon prélevé est supérieure ou égale à la valeur de référence, alors les conditions de fabrication des pièces ne sont pas modifiées.

5. Procédé selon l'une quelconque des revendications 1 à 4, dans lequel à l'étape e), si la valeur de l'indicateur statistique I3C calculée pour l'échantillon prélevé est inférieure à la valeur de référence, alors les conditions de fabrication des pièces sont modifiées et les étapes a) à e) sont réitérées jusqu'à obtenir une valeur de l'indicateur statistique I3C calculée pour un échantillon prélevé qui est supérieure ou égale à la valeur de référence.

**Patentansprüche**

1. Verfahren zur Herstellung von Teilen, die mit einer Herstellungsvorrichtung produziert werden, basierend auf der Analyse mindestens eines statistischen Indikators, der für eine charakteristische Abmessung der Teile repräsentativ ist, umfassend die folgenden automatisierten Schritte, die darin bestehen:

a) Entnehmen, im Laufe der Zeit, mehrerer Proben, wobei jede Probe mehrere mit der Herstellungsvorrichtung produzierte Teile umfasst,
b) Messen, mit einer Messvorrichtung, der charakteristischen Abmessung jedes Teils der Probe,
c) Berechnen, mit einer Rechenvorrichtung, für jede entnommene Probe, eines Durchschnitts $\mu$ und einer Standardabweichung $\sigma$ der gemessenen charakteristischen Abmessung, danach Berechnen, für jede entnommene Probe, eines Werts eines statistischen Indikators I3C, der nach der folgenden Formel festgelegt ist:

$$I3C = \frac{Min(Cc_{max} * TS - \mu\,;\mu - Cc_{max} * TI)}{3\sigma}$$

wobei:

- ∘ $Cc_{max}$ ein obligatorischer maximaler Zentrierungskoeffizient für die Herstellung der Teile ist,
- o TS eine größere Toleranz der gemessenen charakteristischen Abmessung ist,
- ∘ TI eine kleinere Toleranz der gemessenen charakteristischen Abmessung ist,

d) Vergleichen, mit einer Steuervorrichtung, des derart für die entnommene Probe berechneten Werts des statistischen Indikators I3C mit einem Referenzwert, um eine eventuelle Abweichung zwischen dem Wert des statistischen Indikators I3C und dem Referenzwert zu ermitteln,
e) Steuern, mit der Steuervorrichtung, die Herstellung der Teile in Abhängigkeit von den Ergebnissen des Vergleichs durch Anpassen der Einstellungsparameter der Herstellungsvorrichtung, um die Abweichung zwischen dem Wert des statistischen Indikators I3C und dem Referenzwert zu optimieren.

2. Verfahren nach Anspruch 1, wobei in Schritt d) der Referenzwert von der Teileanzahl n der entnommenen Probe abhängt.

3. Verfahren nach Anspruch 2, wobei in Schritt d) der Referenzwert bestimmt wird durch die Formel:

$$\frac{t_\alpha^{n-1}}{3\sqrt{n}}$$

wobei:

◦ $\alpha$ ein Konfidenzniveau in % bezeichnet, und

◦ $t_\alpha^{n-1}$ das Quantil $\alpha$ des Student-Gesetzes bei n-1 Freiheitsgraden bezeichnet.

4. Verfahren nach einem der Ansprüche 1 bis 3, wobei in Schritt e), wenn der für die entnommene Probe berechnete Wert des statistischen Indikators I3C größer als der oder gleich dem Referenzwert ist, die Bedingungen für die Herstellung der Teile nicht verändert werden.

5. Verfahren nach einem der Ansprüche 1 bis 4, wobei in Schritt e), wenn der für die entnommene Probe berechnete Wert des statistischen Indikators I3C kleiner als der Referenzwert ist, die Bedingungen für die Herstellung der Teile verändert und die Schritte a) bis e) wiederholt werden, bis man einen für eine entnommene Probe berechneten Wert des statistischen Indikators I3C erhält, der größer als der oder gleich dem Referenzwert ist.

**Claims**

1. A method for manufacturing parts produced with a manufacturing device, based on an analysis of at least one statistical indicator representative of a characteristic dimension of the parts, comprising the following automated steps consisting in:

a) taking over time several samples, each sample comprising several parts produced with the manufacturing device;
b) measuring, with a measuring device, the characteristic dimension of each part of the sample;
c) calculating, with a calculation device, an average $\mu$ and a standard deviation $\sigma$ of the characteristic dimension measured for each sample taken, then for each sample taken a value of a statistical indicator I3C, as defined according to the formula:

$$I3C = \frac{Min(Cc_{max} * TS - \mu\,;\mu - Cc_{max} * TI)}{3\sigma}$$

where:

◦ $Cc_{max}$ is a maximal centring coefficient imposed for manufacturing parts;
◦ TS is an upper tolerance of the characteristic dimension measured;
◦ TI is a lower tolerance of the characteristic dimension measured;

d) comparing, with a regulating device, the value of the statistical indicator I3C calculated in this way for the sample taken to a reference value in order to detect any standard deviation between the value of the statistical indicator and the reference value;
e) regulating, with the regulating device, the manufacturing of parts as a function of results of comparison by adjusting regulating parameters of the manufacturing device to optimise the deviation between the value of the statistical indicator I3C and the reference value.

2. The method as claimed in Claim 1, in which in step d) the reference value depends on the number n of parts of the sample taken.

3. The method as claimed in Claim 2, in which in step d) the reference value is defined by the formula:

$$\frac{t_\alpha^{n-1}}{3\sqrt{n}}$$

where:

- ∘ α designates a degree of confidence in %; and
- ∘ $t_\alpha^{n-1}$ designates the quantile α of the Student law at n-1 degrees of liberty.

4. The method as claimed in any one of Claims 1 to 3, in which in step e), if the value of the statistical indicator I3C calculated for the sample taken is greater than, or equal to the reference value, the manufacturing conditions of the parts are not modified.

5. The method as claimed in any one of Claims 1 to 4, in which in step e), if the value of the statistical indicator I3C calculated for the sample taken, is less than the reference value, the manufacturing conditions of the parts are modified and steps a) to e) are reiterated to attain a value of the statistical indicator I3C calculated for a sample taken that is greater than or equal to the reference value.

# Fig. 1

# Fig. 2

# Fig. 3

Pièces brutes

Pièces usinées

Echantillonnage de pièces

Dispositif d'usinage

Dispositif de mesure

Dispositif de calcul

Correcteur

Consigne

Consigne

Erreur

Mesures

Valeur indicateur statistique

**EP 3 227 645 B1**

## RÉFÉRENCES CITÉES DANS LA DESCRIPTION

**Documents brevets cités dans la description**

- US 5655110 A